# EUROPEAN PATENT SPECIFICATION

(11) **EP 3 757 478 B1**
(45) Date of publication and mention of the grant of the patent: **27.03.2024**
(21) Application number: 19776346.9
(22) Date of filing: 27.03.2019
(51) Int. Cl.: F24H 7/02, F24H 9/18, F24H 9/20, F24H 9/12, F28D 20/02

(54) **PHASE-CHANGE ELECTRIC WATER HEATER AND WATER TEMPERATURE CONTROL METHOD**
PHASENWECHSELNDER ELEKTRISCHER WASSERERHITZER UND WASSERTEMPERATURSTEUERUNGSVERFAHREN
CHAUFFE-EAU ÉLECTRIQUE À CHANGEMENT DE PHASE ET PROCÉDÉ DE RÉGULATION DE TEMPÉRATURE D'EAU

(30) Priority: 27.03.2018 CN 201810260304; 27.03.2018 CN 201820424639 U; 27.03.2018 CN 201810259828; 27.03.2018 CN 201820424736 U
(43) Date of publication of application: 30.12.2020
(73) Proprietor: Wuhu Midea Kitchen And Bath Appliances Mfg. Co, Ltd., Wuhu, Anhui 241009 (CN); Midea Group Co., Ltd., Foshan, Guangdong 528311 (CN)
(72) Inventor: ZENG, Yun, Wuhu, Anhui 241009 (CN); WANG, Ming, Wuhu, Anhui 241009 (CN); QU, Shaohe, Wuhu, Anhui 241009 (CN)
(74) Representative: RGTH
(86) International application number: PCT/CN2019/079952
(87) International publication number: WO 2019/184961

(56) References cited:
- CN-A- 101 737 843
- CN-A- 102 654 308
- CN-A- 102 654 308
- CN-A- 104 976 765
- CN-A- 104 976 765
- CN-A- 106 196 604
- CN-A- 106 196 604
- CN-A- 108 278 778
- CN-A- 108 489 099
- CN-U- 202 581 799
- CN-U- 205 137 918
- CN-U- 205 717 913
- CN-U- 208 312 700
- CN-U- 208 312 701
- CN-U- 208 312 702
- CN-U- 208 382 572

## Description

### CROSS-REFERENCE TO RELATED APPLICATIONS

This application claims priorities to Chinese Patent Application Serial No. CN201810260304.X as an invention titled with "phase-change electric water heater and water temperature control method"; Chinese Patent Application Serial No. CN201810259828.7 as an invention titled with "phase-change electric water heater and water temperature control method"; Chinese Patent Application Serial No. CN201820424639.6 as a utility model titled with "phase-change electric water heater"; and Chinese Patent Application Serial No. CN201820424736.5 as a utility model titled with "phase-change electric water heater", all of which were filed with the National Intellectual Property Administration of PRC on March 27, 2018, with WUHU MIDEA KITCHEN AND BATH APPLIANCES MFG. CO., LTD. and MIDEA GROUP CO., LTD. as the applicants.

### FIELD

The present disclosure relates to a water heater, and in particular relates to a phase-change electric water heater and a water temperature control method.

### BACKGROUND

Electric water heaters have been widely used due to its convenient and comfortable application and lower costs as compared to other types of water heaters such as a solar water heater. A conventional electric water heater is generally provided with a large water storage tank for heat accumulation, which causes the electric water heater to be large in size and requires a large space for installation. In order to improve bathing comfort and achieve a constant temperature effect, an electric water heater is usually provided with a thermostatic valve to adjust respective opening degrees for hot water and cold water in an outlet pipe. Although this method may achieve a certain constant temperature effect, over-high local temperature or dry-burning will occur in a water tank or a water pipe, which not only impairs the constant temperature effect, but also wastes electric energy, as well as leads to damages to some parts of the water heater. Documents CN106196604A and CN102654308 propose a phase-change electric water heater.

### SUMMARY

In order to address the above technical problem, the present invention proposes a phase-change electric water heater including a circulation pipeline; a phase-change material for heat accumulation; and a liner, provided with an accommodating space therein, wherein the phase-change material and a portion of the circulation pipeline that is in contact with the phase-change material are arranged in the accommodating space;
according to the present embodiment, an inlet end or an outlet end of the circulation pipeline is provided with a pump and a heater,
wherein an inlet end or an outlet end of the circulation pipeline is further provided with a first flow sensor for measuring a water flow in the circulation pipeline,
wherein an inlet end or an outlet end of the circulation pipeline is further provided with a first temperature sensor for measuring a water temperature in the circulation pipeline,
wherein the first flow sensor or the first temperature sensor is arranged at a connecting pipe section between a water outlet of a heater and the phase-change material.

Further, the phase-change electric water heater further includes: an inlet pipe, connected to the circulation pipeline which is arranged inside the phase-change material through an inlet end of the circulation pipeline; and an outlet pipe, connected to the circulation pipeline which is arranged inside the phase-change material through an outlet end of the circulation pipeline.

Further, at least one heater has an inlet connected to an outlet of the pump.

Further, the circulation pipeline is further provided with a second temperature sensor for measuring a temperature of the phase-change material.

Further, the inlet pipe is provided with a second flow sensor for measuring an inlet water flow in the inlet pipe.

Further, the outlet pipe is connected to the outlet end of the circulation pipeline via a thermostatic valve, and one end of the outlet pipe is connected to the thermostatic valve and the other end serving as a water outlet.

Further, the circulation pipeline is further provided with a first branch pipe, a three-way valve and a second branch pipe, the three-way valve has a first end connected to the outlet end of the circulation pipeline via the first branch pipe; a second end of the three-way valve is connected to the inlet pipe via the second branch pipe; and a third end of the three-way valve is connected to the outlet pipe; or the three-way valve connects the inlet end and the outlet end of the circulation pipeline, and one end of the outlet pipe is connected to the three-way valve, the other end serving as a water outlet.

Further, the outlet pipe is further provided with a third temperature sensor for measuring an outlet water temperature in the outlet pipe.

Further, the phase-change electric water heater further includes a one-way valve arranged at the circulation pipeline and configured to connect an outlet end and an inlet end of the circulation pipeline.

Further, the phase-change electric water heater further includes a temperature limiter arranged at a heater to limit a highest heating temperature.

Further, the phase-change electric water heater further includes a one-way relief valve arranged at an inlet pipe, wherein the one-way relief valve is spaced apart from and located upstream of a second flow sensor.

As an example to carry out the present disclosure, the present disclosure provides in embodiments a phase-change electric water heater. The phase-change electric water heater includes: a circulation pipeline and a phase-change material for heat accumulation; wherein at least one side of the circulation pipeline is arranged to be adherent to the phase-change material, an inlet end or an outlet end of the circulation pipeline is provided sequentially with a pump, a heater, a first flow sensor for measuring an outlet water flow of a heater and a first temperature sensor for measuring an outlet water temperature of the heater; an inlet of the heater is connected to an outlet of a pump; the outlet end of the circulation pipeline is provided with a second temperature sensor for measuring a temperature of the phase-change material; the inlet end of the circulation pipeline is further provided with an inlet pipe, and the inlet pipe is provided with a second flow sensor for measuring an inlet water flow in the inlet pipe; the circulation pipeline is further provided with a three-way valve and an outlet pipe, the a first end of the three-way valve is connected to the outlet end of the circulation pipeline via a first branch pipe; a second end of the three-way valve is connected to the inlet pipe via a second branch pipe, and a third end of three-way valve is connected to the outlet pipe; or the three-way valve connects the inlet end and the outlet end of the circulation pipeline; one end of the outlet pipe is connected to the three-way valve, and the other end serving as a water outlet; the outlet pipe is further provided with a third temperature sensor for measuring an outlet water temperature in the outlet pipe.

In another aspect, the present disclosure provides in embodiments a water temperature control method, controlling the phase-change electric water heater as described in embodiments of the aforementioned aspects. The water temperature control method includes: turning off an inlet pipe, turning on a pump and turning on a heater; driving, by the pump, water in a circulation pipeline to flow into the heater for heating; allowing heated water to flow into a portion of the circulation pipeline that is arranged in a phase-change material; allowing heat exchange to occur between the phase-change material and the heated water in the circulation pipeline; and turning off the pump and turning off the heater to stop working.

Further, the water temperature control method further includes: detecting a temperature of the phase-change material, and turning on the pump and turning on the heater for heating when the temperature of the phase-change material is lower than a first threshold temperature.

Further, the water temperature control method further includes: detecting a temperature of the phase-change material, and turning off the pump and turning off the heater to stop heating when the temperature of the phase-change material is lower than a second threshold temperature.

Further, the water temperature control method further includes: turning on the inlet pipe and an outlet pipe; detecting an outlet water temperature of the outlet pipe; adjusting an opening degree of a hot end of a three-way valve which is connected to an outlet end of the circulation pipeline and an opening degree of a cold end of the three-way valve which is connected to an inlet end of the circulation pipeline, when a difference between the outlet water temperature of the outlet pipe and a second threshold temperature is out of a preset range; and controlling water to be discharged from the outlet pipe when a third temperature sensor measures that the difference between the outlet water temperature of the outlet pipe and the second threshold temperature stays within the preset range.

Further, the water temperature control method further includes: turning on the pump to drive water flow towards the heater; and turning off the pump to stop driving when a first flow sensor measures that an outlet water flow of the heater is lower than a preset threshold.

Further, the water temperature control method further includes: turning on the inlet pipe; and turning off a cold end of a three-way valve which is connected to an inlet end of the circulation pipeline when water flows from the inlet pipe to the circulation pipeline for the first time.

Further, the water temperature control method further includes: detecting an outlet water temperature of the heater when the inlet pipe is turned off; and turning off the pump to stop driving and turning off the heater to stop working when the outlet water temperature of the heater achieves a third threshold temperature.

Further, the water temperature control method further includes: turning on the inlet pipe to allow water to flow from the inlet pipe into the heater through an inlet end of the circulation pipeline; turning on the heater when an outlet water temperature of the heater is lower than a fourth threshold temperature; heating, by the heater, the water entering the heater and detecting the outlet water temperature of the heater; and turning off the heater to stop working when the outlet water temperature of the heater achieves the fourth threshold temperature.

Further, the water temperature control method further includes: turning on the inlet pipe and an outlet pipe; detecting an outlet water temperature of the outlet pipe; when a difference between the outlet water temperature of the outlet pipe (150) and a second threshold temperature is out of a preset range, adjusting a thermostatic valve to allow the difference between the outlet water temperature of the outlet pipe and the second threshold temperature stays within the preset range; and controlling water to be discharged from the outlet pipe.

The present disclosure provides in embodiments a phase-change electric water heater and a water temperature control method, where the phase-change material is capable of storing heat; when the temperature of water in the circulation pipeline is low, the water in the circulation pipeline will replace the heat stored in the phase-change material, thereby avoiding use of a storage water tank for heat accumulation, and thus reducing the size of the electric water heater; the first temperature sensor is used for measuring the outlet water temperature of the heater, the second temperature sensor is used for measuring the temperature of the phase-change material and the third temperature sensor is used for measuring the outlet water temperature of the outlet pipe, thereby not only avoiding over-high local water temperature but also guaranteeing a constant outlet water temperature, thus improving the constant temperature effect; and the first flow sensor is used to detect the outlet water flow of the heater, thus avoiding the pump from idling or stalling.

### BRIEF DESCRIPTION OF THE DRAWINGS

Fig. 1 is an alternative schematic view showing a phase-change electric water heater in an embodiment of the present disclosure;
Fig. 2 is another alternative schematic view showing a phase-change electric water heater in an embodiment of the present disclosure;
Fig. 3 is another alternative schematic view showing a phase-change electric water heater in an embodiment of the present disclosure.

### Reference:

a liner 100; an accommodating space 110; a phase-change material 120; a circulation pipeline 130; an inlet end 131 of the circulation pipeline 130; an outlet end 132 of the circulation pipeline 130; a second temperature sensor 140; an outlet pipe 150; a water outlet 151; a third temperature sensor152; a thermostatic valve 153; an inlet pipe 160; a water inlet 161; a second flow sensor 162; a one-way relief valve 163; a one-way valve 170; a pump 180; a heater 190; a temperature limiter 191; a first flow sensor 192; a first temperature sensor 193.

### DETAILED DESCRIPTION

In order to make the object, technical solution and advantage of embodiments of the present application clearer, detailed and integral description will be made below to embodiments of the present disclosure with reference to drawings. Obviously, the described embodiments are some but not all embodiments of the present disclosure. Based on the described embodiments of the disclosure, other embodiments obtainable by those skilled in the art also belong to the scope of the present disclosure.

In the specification, it should be understood that, the terms indicating orientation or position relationship such as "above", "below", "longitudinal", "horizontal", "top", "bottom", "inner" and "outer" should be construed to refer to the orientation or position relationship as then described or as shown in the drawings. These terms are merely for convenience and concision of description and do not alone indicate or imply that the device or element referred to must have a particular orientation or must be configured or operated in a particular orientation. Thus, it cannot be understood to limit the present disclosure. In addition, terms such as "first", "second" and "third" are used herein for purposes of description and are not intended to indicate or imply relative importance or significance or impliedly indicate quantity of the technical feature referred to. The term "upstream" and "downstream" refer to the direction of water flow.

In the present disclosure, unless specified or limited otherwise, the terms "mounted", "connected", "coupled", "fixed" and the like are used broadly, and may be, for example, fixed connections, detachable connections, or integrated connections; may also be mechanical or electrical connections; may also be direct connections or indirect connections via intervening structures; may also be inner communications of two elements, which can be understood by those skilled in the art according to specific situations.

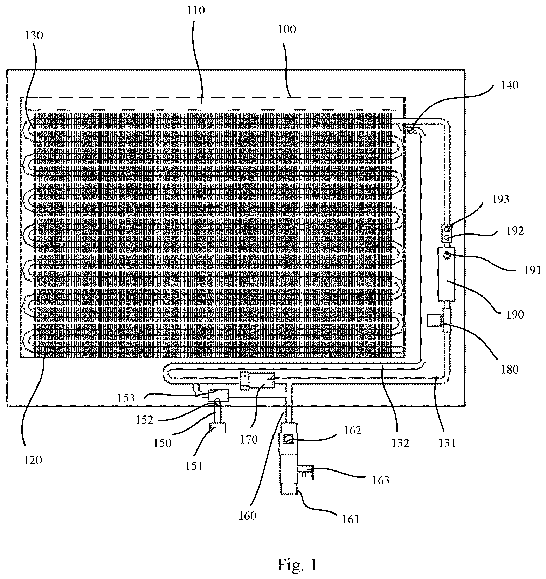

In one aspect, the present disclosure provides in embodiment a phase-change electric water heater. Reference is made below to an alternative schematic view showing a phase-change electric water heater in an embodiment of the present disclosure in conjunction with Figs. 1 to 3.

As shown in Figs. 1 to 3, in embodiments, the phase-change electric water heater includes: a circulation pipeline 130; a phase-change material 120 for heat accumulation; and a liner 100, provided with an accommodating space therein, wherein the phase-change material and a portion of the circulation pipeline that is in contact with the phase-change material are arranged in the accommodating space. The liner 100 is provided with the phase-change material 120, thus providing thermal insulation effect and preventing heat dissipation of the phase-change material 120.

According to the embodiment of the present disclosure, as shown in Figs. 1 to 3, the phase-change electric water heater further includes: an inlet pipe 160, connected to the circulation pipeline 130 which is arranged inside the phase-change material 120 through an inlet end 131 of the circulation pipeline 130; and an outlet pipe 150, connected to the circulation pipeline 130 which is arranged inside the phase-change material 120 through an outlet end 132 of the circulation pipeline 130.

According to the embodiment of the present disclosure, as shown in Figs. 1 to 3, the inlet end 131 or the outlet end 132 of the circulation pipeline 130 is provided with a pump 180 and a heater 190.

According to an alternative implementation of the present disclosure, as shown in Figs. 1 to 3, at least one heater 190 has an inlet connected to an outlet of the pump 180.

According to the embodiment of the present disclosure, as shown in Figs. 1 to 3, the inlet end 131 or the outlet end 132 of the circulation pipeline 130 is further provided with a first flow sensor 192 for measuring a water flow in the circulation pipeline 130.

According to the embodiment of the present disclosure, as shown in Figs. 1 to 3, the inlet end 131 or the outlet end 132 of the circulation pipeline 130 is further provided with a first temperature sensor 193 for measuring a water temperature in the circulation pipeline 130.

According to the embodiment of the present disclosure, as shown in Figs. 1 to 3, the first flow sensor 192 or the first temperature sensor 193 is arranged at a connecting pipe section between a water outlet of the heater 190 and the phase-change material 120.

According to an alternative implementation of the present disclosure, as shown in Figs. 1 to 3, the circulation pipeline 130 is further provided with a second temperature sensor 140 for measuring a temperature of the phase-change material 120.

According to an alternative implementation of the present disclosure, as shown in Figs. 1 to 3, the inlet pipe 160 is provided with a second flow sensor 162 for measuring an inlet water flow in the inlet pipe 160.

According to an alternative implementation of the present disclosure, as shown in Figs. 1 to 3, the outlet pipe 150 is connected to the outlet end 132 of the circulation pipeline 130 via a thermostatic valve 153, and one end of the outlet pipe 150 is connected to the thermostatic valve 153 and the other end serving as a water outlet.

According to an alternative implementation of the present disclosure, as shown in Figs. 1 to 3, the circulation pipeline 130 is further provided with a first branch pipe, a three-way valve and a second branch pipe, a first end of the three-way valve is connected to the outlet end 132 of the circulation pipeline 130 via the first branch pipe; a second end of the three-way valve is connected to the inlet pipe 160 via the second branch pipe; and a third end of three-way valve is connected to the outlet pipe 150; or the three-way valve connects the inlet end 131 and the outlet end 132 of the circulation pipeline 130, and one end of the outlet pipe 150 is connected to the three-way valve, the other end serving as a water outlet.

According to an alternative implementation of the present disclosure, as shown in Figs. 1 to 3, the outlet pipe 150 is further provided with a third temperature sensor 152 for measuring an outlet water temperature in the outlet pipe 150.

According to an alternative implementation of the present disclosure, as shown in Figs. 1 to 3, the phase-change electric water heater further includes a one-way valve 170 arranged at the circulation pipeline 130 and configured to connect the outlet end 132 and the inlet end 131 of the circulation pipeline 130.

According to an alternative implementation of the present disclosure, as shown in Figs. 1 to 3, the phase-change electric water heater further includes a temperature limiter 191 arranged at the heater 190 to limit a highest heating temperature.

According to an alternative implementation of the present disclosure, as shown in Figs. 1 to 3, the phase-change electric water heater further includes a one-way relief valve 163 arranged at the inlet pipe 160, wherein the one-way relief valve 163 is spaced apart from and located upstream of the second flow sensor 162. Figs. 1 to 3 exemplify the one-way relief valve 163 arranged at the inlet pipe 160, thereby avoiding water in the circulation pipeline 130 from backflow to the water inlet 161.

In the present embodiment, the phase-change material 120 is used for heat accumulation or dissipation. In specific, heat exchange occurs between the phase-change material 120 and the heated water in the circulation pipeline 130, thus heat from the water in the circulation pipeline 130 is stored. The phase-change material 120 may also dissipate the saved heat to the water in the circulation pipeline 130, such that the water discharged from the outlet pipe 150 can meet supply demand. One end of the inlet pipe 160 is connected to the circulation pipeline 130 and the other end serving as a water inlet 161, which may be connected to a water source device outside the phase-change electric water heater. For example, the water inlet 161 may be connected to a user's tap water pipe. One end of The outlet pipe 150 connected to a three-way valve and the other end serving as a water outlet 151, which may be connected to a shower in a bathroom. An outlet water temperature of the heater 190 and the temperature of the phase-change material 120 are monitored by a first temperature sensor 193 and a second temperature sensor 140, respectively, thereby avoiding an over-high local water temperature or dry-burning, and thus guaranteeing a constant outlet water temperature.

It would be understood that, in order to improve heat exchange efficacy, a contacting area between the circulation pipeline 130 and the phase-change material 120 is increased; the portion of the circulation pipeline 130 that is in contact with the phase-change material 120 is arranged in a spiral or serpentine shape; and the portion of the circulation pipeline 130 that is in contact with the phase-change material 120 may be arranged in parallel or in series. Fig. 1 exemplifies the portion of the circulation pipeline 130 that is in contact with the phase-change material 120 is arranged in a serpentine shape, and the water in the circulation pipeline 130 flows in a counterclockwise circulating direction. The three-way vale has a first end (the left end of the three-way valve as shown in Figs. 1-3) serving as a hot end; a second end (the right end of the three-way valve as shown in Figs. 1-3) serving as a cold end; and a third end (the bottom end of the three-way valve as shown in Figs. 1-3) serving as an outlet end. The outlet water temperature can be controlled by adjusting respective opening degrees of the cold end and the hot end of the three-way valve, thereby improving the constant effect of the outlet water temperature. In specific, the three-way valve may be a thermostatic valve 153.

As an example to carry out the present disclosure, the present disclosure provides in embodiment a phase-change electric water heater. Reference is made below to an alternative schematic view showing a phase-change electric water heater in an embodiment of the present disclosure in conjunction with Figs. 1 to 3.

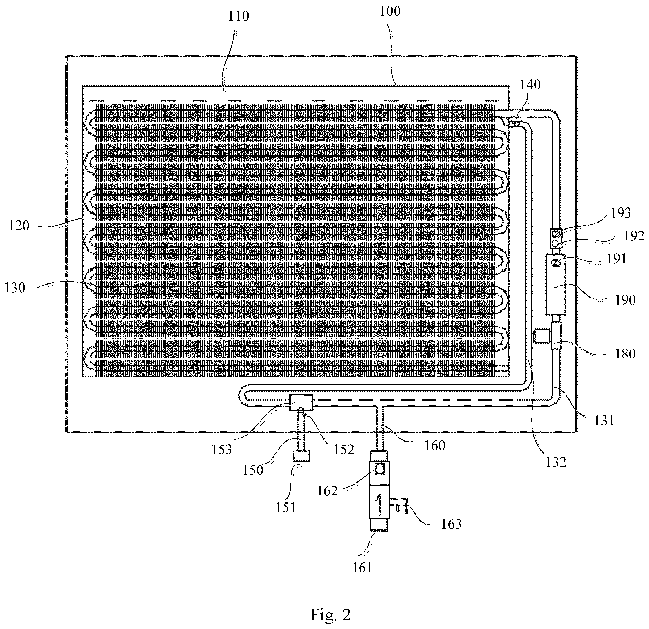

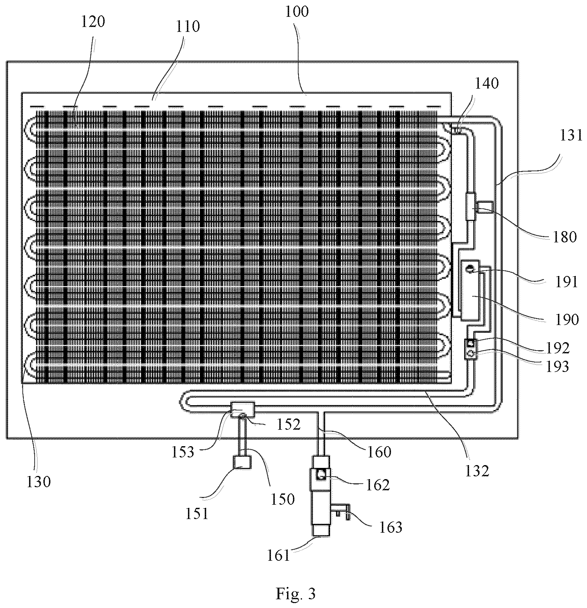

As shown in Figs. 1 to 3, in embodiments, the phase-change electric water heater includes: a circulation pipeline and a phase-change material for heat accumulation; wherein at least one side of the circulation pipeline 130 is arranged to be adherent to the phase-change material 120, an inlet end 131 of the circulation pipeline 130 is provided sequentially with a pump 180, a heater 190, a first flow sensor 192 for measuring an outlet water flow of the heater 190 and a first temperature sensor 193 for measuring an outlet water temperature of the heater 190 (as shown in Figs. 1 and 2); alternatively, an outlet end 132 of the circulation pipeline 130 is provided sequentially with a pump 180, a heater 190, a first flow sensor 192 for measuring an outlet water flow of the heater 190 and a first temperature sensor 193 for measuring an outlet water temperature of the heater 190 (as shown in Fig. 3); an inlet of the heater 190 is connected to an outlet of the pump 180; the outlet end 132 of the circulation pipeline 130 is provided with a second temperature sensor 140 for measuring a temperature of the phase-change material 120; the inlet end 131 of the circulation pipeline 130 is further provided with an inlet pipe 160, and the inlet pipe 160 is provided with a second flow sensor 162 for measuring an inlet water flow in the inlet pipe 160; the outlet end 132 of the circulation pipeline 130 is further provided with a first branch pipe, a three-way valve, an outlet pipe 150 and a second branch pipe; a first end of the three-way valve is connected to the outlet end 132 of the circulation pipeline 130 via the first branch pipe; a second end of the three-way valve is connected to the inlet pipe 160 via the second branch pipe; and a third end of three-way valve is connected to the outlet pipe 150 (as shown in Fig. 1); alternatively, the circulation pipeline 130 is further provided with a three-way valve and an outlet pipe 150, the three-way valve connects the inlet end 131 and the outlet end 132 of the circulation pipeline 130, one end of the outlet pipe 150 is connected to the three-way valve, and the other end serving as a water outlet (as shown in Figs. 2 and 3); the outlet pipe 150 is further provided with a third temperature sensor 152 for measuring an outlet water temperature in the outlet pipe 150.

In the present embodiment, the phase-change material 120 is used for heat accumulation or dissipation. In specific, heat exchange occurs between the phase-change material 120 and the heated water in the circulation pipeline 130, thus heat from the water in the circulation pipeline 130 is stored. The phase-change material 120 may also dissipate the saved heat to the water in the circulation pipeline 130, such that the water discharged from the outlet pipe 150 can meet supply demand. One end of the inlet pipe 160 connected to the circulation pipeline 130 and the other end serving as a water inlet 161, which may be connected to a water source device outside the phase-change electric water heater. For example, the water inlet 161 may be connected to a user's tap water pipe. One end of the outlet pipe 150 is connected to a three-way valve and the other end serving as a water outlet 151, which may be connected to a shower in a bathroom. An outlet water temperature of the heater 190 and the temperature of the phase-change material 120 are monitored by a first temperature sensor 193 and a second temperature sensor 140 respectively, thereby avoiding an over-high local water temperature or dry-burning, and thus guaranteeing a constant outlet water temperature.

It would be understood that, in order to improve heat exchange efficacy, a contacting area between the circulation pipeline 130 and the phase-change material 120 is increased; the portion of the circulation pipeline 130 that is in contact with the phase-change material 120 is arranged in a spiral or serpentine shape; and the portion of the circulation pipeline 130 that is in contact with the phase-change material 120 may be arranged in parallel or in series. Fig. 1 exemplifies the portion of the circulation pipeline 130 that is in contact with the phase-change material 120 is arranged in a serpentine shape, and water in the circulation pipeline 130 flows in a counterclockwise circulating direction. The three-way vale has a first end (the left end of the three-way valve as shown in Figs. 1-3) serving as a hot end; a second end (the right end of the three-way valve as shown in Figs. 1-3) serving as a cold end; and a third end (the bottom end of the three-way valve as shown in Figs. 1-3) serving as an outlet end. The outlet water temperature can be controlled by adjusting respective opening degrees of the cold end and the hot end of the three-way valve, thereby improving the constant effect of the outlet water temperature. In specific, the three-way valve may be a thermostatic valve 153.

In an alternative implementation of the present disclosure, as shown in Fig. 1, the phase-change electric water heater further includes a one-way valve 170 arranged at the circulation pipeline 130 and configured to connect the outlet end 132 and the inlet end 131 of the circulation pipeline 130. The one-way valve 170 only allows water to flow from the outlet end 132 of the circulation pipeline 130 to the inlet end 131 of the circulation pipeline 130, but forbids water to flow in the reverse direction, thereby ensuring that cold water flows towards the heater 190 after entering the circulation pipeline 130.

According to an alternative implementation of the present disclosure, as shown in Figs. 1 to 3, the phase-change electric water heater further includes a temperature limiter 191 arranged at the heater 190 to limit a highest heating temperature. The heater 190 is provided with the temperature limiter 191, such that it is possible to prevent water evaporation due to over-high temperature during heating, thereby avoiding the water temperature from being over-high and thus improving the constant temperature effect.

According to an alternative implementation of the present disclosure, as shown in Figs. 1 to 3, the phase-change electric water heater further includes a one-way relief valve 163 arranged at the inlet pipe 160, wherein the one-way relief valve 163 is spaced apart from and located upstream of the second flow sensor 162. Figs. 1 to 3 exemplify the one-way relief valve 163 arranged at the inlet pipe 160, thereby avoiding water in the circulation pipeline 130 from backflow to the water inlet 161.

According to an alternative implementation of the present disclosure, as shown in Figs. 1 to 3, the phase-change electric water heater further includes a liner 100 provided with an accommodating space 110 therein, wherein the phase-change material 120 and a portion of the circulation pipeline 130 that is in contact with the phase-change material 120 are arranged in the accommodating space. The liner 100 is provided with the phase-change material 120, thus providing the thermal insulation effect and preventing heat dissipation of the phase-change material 120.

In still another aspect, the present disclosure provides in embodiments a water temperature control method, controlling the phase-change electric water heater as described in the aforementioned embodiments. The water temperature control method includes: turning off an inlet pipe 160, turning on a pump 180 and turning on a heater 190; driving, by the pump 180, water in a circulation pipeline 130 to flow into the heater 190 for heating; allowing heated water to flow into a portion of the circulation pipeline 130 that is arranged in a phase-change material 120; allowing heat exchange to occur between the phase-change material 120 and the heated water in the circulation pipeline 130; and turning off the pump 180 and turning off the heater 190 to stop working.

In an alternative implementation of the present disclosure, the water temperature control method further includes: detecting a temperature of the phase-change material 120, and turning on the pump 180 and turning on the heater 190 for heating when the temperature of the phase-change material 120 is lower than a first threshold temperature.

In an alternative implementation of the present disclosure, the water temperature control method further includes: detecting a temperature of the phase-change material 120, and turning off the pump 180 and turning off the heater 190 to stop heating when the temperature of the phase-change material 120 is lower than a second threshold temperature.

In an alternative implementation of the present disclosure, the water temperature control method further includes: turning on an inlet pipe 160 and turning on an outlet pipe 150; detecting an outlet water temperature of the outlet pipe 150; adjusting an opening degree of a hot end of a three-way valve which is connected to an outlet end 132 of the circulation pipeline 130 and an opening degree of a cold end of the three-way valve which is connected to an inlet end 131 of the circulation pipeline 130, when a difference between the outlet water temperature of the outlet pipe 150 and a second threshold temperature is out of a preset range; and controlling water to be discharged from the outlet pipe 150 when a third temperature sensor 152 measures that the difference between the outlet water temperature of the outlet pipe 150 and the second threshold temperature stays within the preset range.

In an alternative implementation of the present disclosure, the water temperature control method further includes: turning on the pump 180 to drive water flow to the heater 190; and turning off the pump 180 to stop driving when a first flow sensor 192 measures that an outlet water flow of the heater 190 is lower than a preset threshold.

In an alternative implementation of the present disclosure, the water temperature control method further includes: turning on an inlet pipe 160; and turning off a cold end of a three-way valve which is connected to an inlet end 131 of the circulation pipeline 130 when water flows from the inlet pipe 160 to the circulation pipeline 130 for the first time.

In an alternative implementation of the present disclosure, the water temperature control method further includes: detecting an outlet water temperature of the heater 190 when the inlet pipe 160 is turned off; and turning off the pump 180 to stop driving and turning off the heater 190 to stop working when the outlet water temperature of the heater 190 achieves a third threshold temperature.

In an alternative implementation of the present disclosure, the water temperature control method further includes: turning on an inlet pipe 160 to allow water to flow from the inlet pipe 160 into the heater 190 through an inlet end 131 of the circulation pipeline 130; turning on the heater 190 when an outlet water temperature of the heater 190 is lower than a fourth threshold temperature; heating, by the heater 190, the water entering the heater 190 and detecting the outlet water temperature of the heater 190; and turning off the heater 190 to stop working when the outlet water temperature of the heater 190 achieves the fourth threshold temperature.

In an alternative implementation of the present disclosure, the water temperature control method further includes: turning on an inlet pipe 160 and an outlet pipe 150; detecting an outlet water temperature of the outlet pipe 150; when a difference between the outlet water temperature of the outlet pipe (150) and a second threshold temperature is out of a preset range, adjusting a thermostatic valve 153 to allow the difference between the outlet water temperature of the outlet pipe 150 and the second threshold temperature stays within the preset range; and controlling water to be discharged from the outlet pipe 150.

In still another aspect, the present disclosure provides in embodiments a water temperature control method, controlling the phase-change electric water heater as described in the aforementioned embodiments. The water temperature control method includes: turning on a pump 180 and turning on a heater 190 when an inlet pipe 160 is turned off and a second temperature sensor 140 measures that a temperature of a phase-change material 120 is lower than a first threshold temperature; driving, by the pump 180, water in a circulation pipeline 130 to flow in a direction from the outlet end 132 to the inlet end 131 of the circulation pipeline 130; allowing water to flow into the heater 190 for heating; allowing heated water to flow into the circulation pipeline 130 again from the inlet end 131 of the circulation pipeline 130, allowing heat exchange to occur between the phase-change material 120 and the heated water in the circulation pipeline 130; and turning off the pump 180 to stop driving and turning off the heater 190 to stop working when the second temperature sensor 140 measures that the temperature of the phase-change material 120 achieves the first threshold temperature.

In the present embodiment, the pump 180 is turned on when the inlet pipe 160 is turned off and the second temperature sensor 140 measures that the temperature of the phase-change material 120 is lower than the first threshold temperature. The pump 180 may be turned on after the temperature of the phase-change material 120 is lower than the first threshold temperature for a certain temperature range. For example, the pump 180 is turned on when the temperature of the phase-change material 120 is -5°C lower than the first threshold temperature. The temperature of the phase-change material 120 may be a temperature of the phase-change material 120 itself, or may be a temperature of water in the portion of the circulation pipeline 130 that is in contact with the phase-change material 120. The first temperature sensor 193 measures an outlet water temperature of the heater 190 in real time. The heater 190 is turned on within a first preset duration, e.g., 6s, 10s, 12s or 15s, when the first temperature sensor 193 measures that the outlet water temperature of the heater 190 is less than a third threshold temperature, for example when the first temperature sensor 193 measures that the outlet water temperature of the heater 190 is less than 88°C, 90°C, 91°C, 93°C, 95°C or 98°C. The pump 180 drives water in the circulation pipeline 130 to flow in a direction from the outlet end 132 to the inlet end 131 of the circulation pipeline 130; water is then allowed to flow into the heater 190 for heating; heated water is then allowed to flow into the circulation pipeline 130 again from the inlet end 131 of the circulation pipeline 130; heat exchange is allowed to occur between the phase-change material 120 and the heated water in the circulation pipeline 130; and the pump 180 is turned off to stop driving and the heater 190 is turned off to stop working when the second temperature sensor 140 measures that the temperature of the phase-change material 120 achieves the first threshold temperature. In specific, the heater 190 is turned off, e.g., by cutting off power supply for the heater 190, when the temperature of the phase-change material 120 is equal to or greater than the first threshold temperature. The pump may continue working for a second preset duration, e.g., 20s, 30s, 40s or 45s, till turned off. The above control mode is the working mode of the phase-change electric water heater when the inlet pipe 160 is turned off, i.e., the second flow sensor 162 detects that the inlet water flow of the inlet pipe 160 is zero.

When the inlet pipe 160 is turned on, i.e., a water flow exists in the inlet pipe 160, and the pump 180 is not in operation, the working mode of the phase-change electric water heater includes: turning on the heater 190 when the first flow sensor 192 measures an outlet water flow of the heater 190 is greater than a preset flow and the first temperature sensor 193 measures that an outlet water temperature of the heater 190 is greater than a fourth threshold temperature, for example, when the first flow sensor 192 measures the outlet water flow of the heater 190 is greater than 2 L/min, 3 L/ min or 5 L/ min and the first temperature sensor 193 measures that the outlet water temperature of the heater 190 is greater than 88°C, 90°C, 91°C, 93°C, 95°C or 98°C; otherwise allowing the heater 190 not to heat. The fourth threshold temperature may be equal to the first threshold temperature.

In an alternative implementation of the present disclosure, the water temperature control method further includes: adjusting an opening degree of a hot end of a three-way valve which is connected to an outlet end 132 of the circulation pipeline 130 and an opening degree of a cold end of the three-way valve which is connected to an inlet end 131 of the circulation pipeline 130, when a third temperature sensor 152 measures that a difference between an outlet water temperature of an outlet pipe 150 and a second threshold temperature is out of a preset range; and controlling water to be discharged from the outlet pipe 150 when the third temperature sensor 152 measures that the difference between the outlet water temperature of the outlet pipe 150 and the second threshold temperature stays within the preset range.

In specific, the third temperature sensor 152 may be arranged at one end of the outlet pipe 150 which is connected to the three-way valve, that is, a temperature of the outlet pipe 150 detected by the third temperature sensor 152 refers to a water temperature at an outlet end of the three-way valve. The three-way valve may be connected to an electric motor such that the respective opening degrees of the cold end and the hot end of the three-way valve may be controlled by the electric motor. A preset range for a difference between an outlet water temperature of the three-way valve and the fourth threshold temperature may be set as 0 to 2°C, 0 to 3°C, 0 to 4°C or 0 to 5°C. Taking the preset range being 0 to 2°C as an example, the opening degree of the hot end of the three-way vale is decreased and the opening degree of the cold end of the three-way vale is increased by the electric motor, when the outlet water temperature of the outlet pipe 150, e.g., the outlet water temperature of the three-way valve, is 2°C or more greater than the fourth preset temperature. The opening degree of the hot end of the three-way vale is increased and the opening degree of the cold end of the three-way vale is decreased by the electric motor, when the outlet water temperature of the three-way valve is 2°C or more greater than the fourth preset temperature. The outlet pipe 150 is controlled to discharge water when the difference between the outlet water temperature of the three-way valve and the fourth preset temperature is within 2°C by continuous measuring and adjusting.

In an alternative implementation of the present disclosure, the water temperature control method further includes: turning on the pump 180; driving, by the pump 180, water to flow towards the heater 190; and turning off the pump 180 to stop driving when the first flow sensor 192 measures that the outlet water flow of the heater 190 is lower than a preset threshold.

For example, after the pump 180 is turned on to drive water flow towards the heater 190, when the first flow sensor 192 measures that an outlet water flow of the heater 190 is 0 L/min, or below 0.1 L/min or 0.5 L/min, the pump 180 is turned off to stop driving. If the first flow sensor 192 measures that the outlet water flow of the heater 190 is not 0 L/min, or not below 0.1 L/min or 0.5 L/min, the pump 180 continues working.

In an alternative implementation of the present disclosure, the water temperature control method further includes: turning on the inlet pipe 160; and turning off the cold end of the three-way valve which is connected to the inlet end 131 of the circulation pipeline 130 when water flows from the inlet pipe 160 to the circulation pipeline 130 for the first time. It would be appreciated that when the phase-change electric water heater is used for the first time, it needs to be watered at first to ensure that there is water in the circulation pipeline 130.

In an alternative implementation of the present disclosure, the water temperature control method further includes: turning off the pump 180 to stop driving and turning off the heater 190 to stop working when the inlet pipe 160 is turned off and the first temperature sensor 193 measures that an outlet water temperature of the heater 190 achieves the third temperature threshold.

In an alternative implementation of the present disclosure, the water temperature control method further includes: turning on the inlet pipe 160, allowing water to flow from the inlet pipe 160 into the heater 190 via the inlet end 131 of the circulation pipeline 130; turning on the heater 190 when the first temperature sensor 193 measures that the outlet water temperature of the heater 190 is less than the fourth temperature threshold; heating, by the heater 190, water entering the heater 190; and turning off the heater 190 to stop working when the first temperature sensor 193 measures that the outlet water temperature of the heater 190 achieves the fourth temperature threshold.

Other structures and operations of the phase-change electric water heater according to embodiments of the present disclosure are understandable and easy to implement for those skilled in the art, and therefore will not be described in detail.

The above are only preferred embodiments of the present disclosure, and are not used to limit the scope of the present disclosure.

## Claims

1. A phase-change electric water heater, comprising:
a circulation pipeline (130);
a phase-change material (120) for heat accumulation; and
a liner (100), provided with an accommodating space (110) therein,
wherein the phase-change material (120) and a portion of the circulation pipeline (130) that is in contact with the phase-change material (120) are arranged in the accommodating space (110);
wherein an inlet end (131) or an outlet end (132) of the circulation pipeline (130) is provided with a pump (180) and a heater (190),
**characterized in that**
wherein the inlet end (131) or the outlet end (132) of the circulation pipeline (130) is further provided with a first flow sensor (192) for measuring a water flow in the circulation pipeline (130), and
wherein the inlet end (131) or the outlet end (132) of the circulation pipeline (130) is further provided with a first temperature sensor (193) for measuring a water temperature in the circulation pipeline (130), wherein the first flow sensor (192) or the first temperature sensor (193) is arranged at a connecting pipe section of the circulation pipeline (130) between the water outlet (151) of the heater (190) and the phase-change material (120).

2. The phase-change electric water heater according to claim 1, further comprising:
an inlet pipe (160), connected to the circulation pipeline (130) which is arranged inside the phase-change material (120) through an inlet end (131) of the circulation pipeline (130); and
an outlet pipe (150), connected to the circulation pipeline (130) which is arranged inside the phase-change material (120) through an outlet end (132) of the circulation pipeline (130).

3. The phase-change electric water heater according to claim 1 or 2, wherein at least one heater (190) has an inlet connected to an outlet of the pump (180).

4. The phase-change electric water heater according to any one of claims 1 to 3, wherein the circulation pipeline (130) is further provided with a second temperature sensor (140) for measuring a temperature of the phase-change material (120).

5. The phase-change electric water heater according to any one of claims 2 to 4, wherein the inlet pipe (160) is provided with a second flow sensor (162) for measuring an inlet water flow in the inlet pipe (160),
and/or,
wherein the outlet pipe (150) is connected to the outlet end (132) of the circulation pipeline (130) via a thermostatic valve (153), and one end of the outlet pipe (150) is connected to the thermostatic valve (153) and the other end serving as a water outlet (151).

6. The phase-change electric water heater according to any one of claims 1 to 5, wherein
the circulation pipeline (130) is further provided with a first branch pipe, a three-way valve and a second branch pipe,
a first end of the three-way valve is connected to the outlet end (132) of the circulation pipeline (130) via the first branch pipe; a second end of the three-way valve is connected to the inlet pipe (160) via the second branch pipe; and a third end of the three-way valve is connected to the outlet pipe (150); or
the three-way valve connects the inlet end (131) and the outlet end (132) of the circulation pipeline (130), and one end of the outlet pipe (150) is connected to the three-way valve, the other end serving as a water outlet (151).

7. The phase-change electric water heater according to any one of claims 2 to 6, wherein the outlet pipe (150) is further provided with a third temperature sensor (152) for measuring an outlet water temperature in the outlet pipe (150).

8. The phase-change electric water heater according to any one of claims 1 to 7, further comprising a one-way valve (170) arranged at the circulation pipeline (130) and configured to connect an outlet end (132) and an inlet end (131) of the circulation pipeline (130),
and/or,
further comprising a temperature limiter (191) arranged at the heater (190) to limit a highest heating temperature,
and/or,
further comprising a one-way relief valve (163) arranged at the inlet pipe (160), wherein the one-way relief valve (163) is spaced apart from and located upstream of the second flow sensor (162).

9. A water temperature control method, for controlling a phase-change electric water heater as defined in any one of claims 1 to 8, wherein the water temperature control method comprises:
turning off an inlet pipe (160), turning on a pump (180) and turning on a heater (190);
driving, by the pump (180), water in a circulation pipeline (130) to flow into the heater (190) for heating;
allowing heated water to flow into a portion of the circulation pipeline (130) that is arranged in a phase-change material (120);
allowing heat exchange to occur between the phase-change material (120) and the heated water in the circulation pipeline (130); and
turning off the pump (180) and turning off the heater (190) to stop working.

10. The water temperature control method according claim 9, further comprising:
detecting a temperature of the phase-change material (120), and
turning on the pump (180) and turning on the heater (190) for heating when the temperature of the phase-change material (120) is lower than a first threshold temperature,
and/or,
further comprising:
detecting a temperature of the phase-change material (120), and
turning off the pump (180) and turning off the heater (190) to stop heating when the temperature of the phase-change material (120) is lower than a second threshold temperature.

11. The water temperature control method according claim 9 or 10, further comprising:
turning on the inlet pipe (160) and an outlet pipe (150);
detecting an outlet water temperature of the outlet pipe (150);
adjusting an opening degree of a hot end of a three-way valve which is connected to an outlet end (132) of the circulation pipeline (130) and an opening degree of a cold end of the three-way valve which is connected to an inlet end (131) of the circulation pipeline (130), when a difference between the outlet water temperature of the outlet pipe (150) and a second threshold temperature is out of a preset range; and
controlling water to be discharged from, the outlet pipe (150) when a third temperature sensor (152) measures that the difference between the outlet water temperature of the outlet pipe (150) and the second threshold temperature is within the preset range,
and/or,
further comprising:
turning on the pump (180) to drive water flow towards the heater (190); and
turning off the pump (180) to stop driving when a first flow sensor (192) measures that an outlet water flow of the heater (190) is lower than a preset threshold.

12. The water temperature control method according any one of claims 9 to 11, further comprising:
turning on the inlet pipe (160); and
turning off a cold end of a three-way valve which is connected to an inlet end (131) of the circulation pipeline (130) when water flows from the inlet pipe (160) to the circulation pipeline (130) for the first time,
and/or,
further comprising:
detecting an outlet water temperature of the heater (190) when the inlet pipe (160) is turned off; and
turning off the pump (180) to stop driving and turning off the heater (190) to stop working when the outlet water temperature of the heater (190) achieves a third threshold temperature.

13. The water temperature control method according any one of claims 9 to 12, further comprising:
turning on the inlet pipe (160) to allow water to flow from the inlet pipe (160) into the heater (190) through an inlet end (131) of the circulation pipeline (130);
turning on the heater (190) when an outlet water temperature of the heater (190) is lower than a fourth threshold temperature;
heating, by the heater (190), the water entering the heater (190) and detecting the outlet water temperature of the heater (190); and
turning off the heater (190) to stop working when the outlet water temperature of the heater (190) achieves the fourth threshold temperature,
and/or,
further comprising:
turning on the inlet pipe (160) and an outlet pipe (150);
detecting an outlet water temperature of the outlet pipe (150);
when a difference between the outlet water temperature of the outlet pipe (150) and the second threshold temperature is out of a preset range, adjusting a thermostatic valve (153) to allow the difference between the outlet water temperature of the outlet pipe (150) and a second threshold temperature stays within the preset range; and
controlling the water to be discharged from the outlet pipe (150).

## Patentansprüche

1. Elektrischer Phasenwechsel-Wassererhitzer, umfassend:
eine Zirkulationsleitung (130);
ein Phasenwechselmaterial (120) zur Wärmespeicherung; und
eine Auskleidung (100), die mit einem Aufnahmeraum (110) darin versehen ist,
wobei das Phasenwechselmaterial (120) und ein Bereich der Zirkulationsleitung (130), der mit dem Phasenwechselmaterial (120) in Kontakt ist, in dem Aufnahmeraum (110) angeordnet sind;
wobei ein Einlassende (131) oder ein Auslassende (132) der Zirkulationsleitung (130) mit einer Pumpe (180) und einem Erhitzer (190) versehen ist,
**dadurch gekennzeichnet, dass**
das Einlassende (131) oder das Auslassende (132) der Zirkulationsleitung (130) ferner mit einem ersten Strömungssensor (192) zum Messen eines Wasserstroms in der Zirkulationsleitung (130) versehen ist, und
wobei das Einlassende (131) oder das Auslassende (132) der Zirkulationsleitung (130) ferner mit einem ersten Temperatursensor (193) zum Messen einer Wassertemperatur in der Zirkulationsleitung (130) versehen ist, wobei der erste Strömungssensor (192) oder der erste Temperatursensor (193) an einem Verbindungsrohrabschnitt der Zirkulationsleitung (130) zwischen dem Wasserauslass (151) des Erhitzers (190) und dem Phasenwechselmaterial (120) angeordnet ist.

2. Elektrischer Phasenwechsel-Wassererhitzer gemäß Anspruch 1, ferner umfassend:
ein Einlassrohr (160), das mit der Zirkulationsleitung (130) verbunden ist, die innerhalb des Phasenwechselmaterials (120) durch ein Einlassende (131) der Zirkulationsleitung (130) angeordnet ist; und
ein Auslassrohr (150), das mit der Zirkulationsleitung (130) verbunden ist, die innerhalb des Phasenwechselmaterials (120) durch ein Auslassende (132) der Zirkulationsleitung (130) angeordnet ist.

3. Elektrischer Phasenwechsel-Wassererhitzer gemäß Anspruch 1 oder 2, wobei mindestens ein Erhitzer (190) einen Einlass aufweist, der mit einem Auslass der Pumpe (180) verbunden ist.

4. Elektrischer Phasenwechsel-Wassererhitzer gemäß einem der Ansprüche 1 bis 3, wobei die Zirkulationsleitung (130) ferner mit einem zweiten Temperatursensor (140) zum Messen einer Temperatur des Phasenwechselmaterials (120) versehen ist.

5. Elektrischer Phasenwechsel-Wassererhitzer gemäß einem der Ansprüche 2 bis 4, wobei das Einlassrohr (160) mit einem zweiten Strömungssensor (162) zum Messen eines Einlasswasserstroms im Einlassrohr (160) versehen ist,
und/oder,
wobei das Auslassrohr (150) über ein Thermostatventil (153) mit dem Auslassende (132) der Zirkulationsleitung (130) verbunden ist, und ein Ende des Auslassrohrs (150) mit dem Thermostatventil (153) verbunden ist und das andere Ende als Wasserauslass (151) dient.

6. Elektrischer Phasenwechsel-Wassererhitzer gemäß einem der Ansprüche 1 bis 5, wobei
die Zirkulationsleitung (130) ferner mit einem ersten Abzweigrohr, einem Dreiwegeventil und einem zweiten Abzweigrohr versehen ist,
ein erstes Ende des Dreiwegeventils über das erste Abzweigrohr mit dem Auslassende (132) der Zirkulationsleitung (130) verbunden ist; ein zweites Ende des Dreiwegeventils über das zweite Abzweigrohr mit dem Einlassrohr (160) verbunden ist; und ein drittes Ende des Dreiwegeventils mit dem Auslassrohr (150) verbunden ist; oder
das Dreiwegeventil das Einlassende (131) und das Auslassende (132) der Zirkulationsleitung (130) verbindet, und ein Ende des Auslassrohrs (150) mit dem Dreiwegeventil verbunden ist, das andere Ende als Wasserauslass (151) dient.

7. Elektrischer Phasenwechsel-Wassererhitzer gemäß einem der Ansprüche 2 bis 6, wobei das Auslassrohr (150) ferner mit einem dritten Temperatursensor (152) zum Messen einer Auslasswassertemperatur in dem Auslassrohr (150) versehen ist.

8. Elektrischer Phasenwechsel-Wassererhitzer gemäß einem der Ansprüche 1 bis 7, ferner umfassend ein Einwegventil (170), das an der Zirkulationsleitung (130) angeordnet und so konfiguriert ist, dass es ein Auslassende (132) und ein Einlassende (131) der Zirkulationsleitung (130) verbindet,
und/oder,
ferner umfassend einen Temperaturbegrenzer (191), der an dem Erhitzer (190) angeordnet ist, um eine höchste Heiztemperatur zu begrenzen,
und/oder,
ferner umfassend ein Einweg-Entlastungsventil (163), das an dem Einlassrohr (160) angeordnet ist, wobei das Einweg-Entlastungsventil (163) von dem zweiten Strömungssensor (162) beabstandet und stromaufwärts von diesem angeordnet ist.

9. Wassertemperatursteuerungsverfahren zum Steuern eines elektrischen Phasenwechsel-Wassererhitzers gemäß einem der Ansprüche 1 bis 8, wobei das Wassertemperatursteuerungsverfahren Folgendes umfasst:
Zudrehen eines Einlassrohrs (160), Einschalten einer Pumpe (180) und Einschalten eines Erhitzers (190);
Antreiben des Wassers in einer Zirkulationsleitung (130) durch die Pumpe (180), so dass es zum Heizen in den Erhitzer (190) strömt;
Zulassen, dass erhitztes Wasser in einen Bereich der Zirkulationsleitung (130) strömt, der in einem Phasenwechselmaterial (120) angeordnet ist;
Zulassen, dass ein Wärmeaustausch zwischen dem Phasenwechselmaterial (120) und dem erhitzten Wasser in der Zirkulationsleitung (130) stattfinden kann; und
Ausschalten der Pumpe (180) und Ausschalten des Erhitzers (190), um den Betrieb einzustellen.

10. Wassertemperatursteuerungsverfahren gemäß Anspruch 9, ferner umfassend:
Erfassen einer Temperatur des Phasenwechselmaterials (120), und
Einschalten der Pumpe (180) und Einschalten des Erhitzers (190) zum Heizen, wenn die Temperatur des Phasenwechselmaterials (120) unter einer ersten Schwellentemperatur liegt,
und/oder,
ferner umfassend:
Erfassen einer Temperatur des Phasenwechselmaterials (120), und
Ausschalten der Pumpe (180) und Ausschalten des Erhitzers (190), um das Heizen zu beenden, wenn die Temperatur des Phasenwechselmaterials (120) unter einer zweiten Schwellentemperatur liegt.

11. Wassertemperatursteuerungsverfahren gemäß Anspruch 9 oder 10, ferner umfassend:
Aufdrehen des Einlassrohrs (160) und eines Auslassrohrs (150);
Erfassen einer Auslasswassertemperatur des Auslassrohrs (150);
Einstellen eines Öffnungsgrades eines heißen Endes eines Dreiwegeventils, das mit einem Auslassende (132) der Zirkulationsleitung (130) verbunden ist, und eines Öffnungsgrades eines kalten Endes des Dreiwegeventils, das mit einem Einlassende (131) der Zirkulationsleitung (130) verbunden ist, wenn eine Differenz zwischen der Auslasswassertemperatur des Auslassrohrs (150) und einer zweiten Schwellentemperatur außerhalb eines voreingestellten Bereichs liegt; und
Steuern des aus dem Auslassrohr (150) abzuführenden Wassers, wenn ein dritter Temperatursensor (152) misst, dass die Differenz zwischen der Auslasswassertemperatur des Auslassrohrs (150) und der zweiten Schwellentemperatur innerhalb des voreingestellten Bereichs liegt,
und/oder,
ferner umfassend:
Einschalten der Pumpe (180), um den Wasserstrom zum Erhitzer (190) zu treiben; und
Ausschalten der Pumpe (180), um das Antreiben zu stoppen, wenn ein erster Strömungssensor (192) misst, dass ein Auslasswasserstrom des Erhitzers (190) niedriger als ein voreingestellter Schwellenwert ist.

12. Wassertemperatursteuerungsverfahren gemäß einem der Ansprüche 9 bis 11, ferner umfassend:
Aufdrehen des Einlassrohrs (160); und
Zudrehen eines kalten Endes eines Dreiwegeventils, das mit einem Einlassende (131) der Zirkulationsleitung (130) verbunden ist, wenn zum ersten Mal Wasser von dem Einlassrohr (160) in die Zirkulationsleitung (130) strömt,
und/oder,
ferner umfassend:
Erfassen einer Auslasswassertemperatur des Erhitzers (190), wenn das Einlassrohr (160) zugedreht ist; und
Ausschalten der Pumpe (180), um das Antreiben zu stoppen, und Ausschalten des Erhitzers (190), um den Betrieb zu stoppen, wenn die Wasseraustrittstemperatur des Erhitzers (190) eine dritte Schwellentemperatur erreicht.

13. Wassertemperatursteuerungsverfahren gemäß einem der Ansprüche 9 bis 12, ferner umfassend:
Aufdrehen des Einlassrohrs (160), damit Wasser aus dem Einlassrohr (160) durch ein Einlassende (131) der Zirkulationsleitung (130) in den Erhitzer (190) strömen kann;
Einschalten des Erhitzers (190), wenn eine Auslasswassertemperatur des Erhitzers (190) niedriger als eine vierte Schwellentemperatur ist;
Erhitzen des in den Erhitzer (190) eintretenden Wassers durch den Erhitzer (190) und Erfassen der Auslasswassertemperatur des Erhitzers (190); und
Ausschalten des Erhitzers (190), um den Betrieb einzustellen, wenn die Wasserauslasstemperatur des Erhitzers (190) die vierte Schwellentemperatur erreicht,
und/oder,
ferner umfassend:
Aufdrehen des Einlassrohrs (160) und eines Auslassrohrs (150);
Erfassen einer Auslasswassertemperatur des Auslassrohrs (150);
wenn eine Differenz zwischen der Auslasswassertemperatur des Auslassrohrs (150) und der zweiten Schwellentemperatur außerhalb eines voreingestellten Bereichs liegt, Einstellen eines Thermostatventils (153), damit die Differenz zwischen der Auslasswassertemperatur des Auslassrohrs (150) und einer zweiten Schwellentemperatur innerhalb des voreingestellten Bereichs bleiben kann ; und
Steuern des aus dem Auslassrohr (150) abzuführenden Wassers.

## Revendications

1. Chauffe-eau électrique à changement de phase, comprenant
une conduite de circulation (130) ;
un matériau à changement de phase (120) pour l'accumulation de chaleur ; et
un revêtement (100), pourvu d'un espace de logement (110) à l'intérieur,
dans lequel le matériau à changement de phase (120) et une partie de la conduite de circulation (130) en contact avec le matériau à changement de phase (120) sont disposés dans l'espace de logement (110) ;
dans lequel une extrémité d'entrée (131) ou une extrémité de sortie (132) de la conduite de circulation (130) est pourvue d'une pompe (180) et d'un élément de chauffage (190),
**caractérisé par le fait que**
l'extrémité d'entrée (131) ou l'extrémité de sortie (132) de la conduite de circulation (130) est en outre équipée d'un premier capteur de débit (192) pour mesurer le débit d'eau dans la conduite de circulation (130), et
l'extrémité d'entrée (131) ou l'extrémité de sortie (132) de la conduite de circulation (130) est en outre équipée d'un premier capteur de température (193) pour mesurer la température de l'eau dans la conduite de circulation (130), le premier capteur de débit (192) ou le premier capteur de température (193) étant disposé sur une section de tuyau de raccordement de la conduite de circulation (130) entre la sortie d'eau (151) de l'élément de chauffage (190) et le matériau à changement de phase (120).

2. Le chauffe-eau électrique à changement de phase selon la revendication 1, comprenant en outre :
un tuyau d'entrée (160), connecté à la conduite de circulation (130) qui est disposée à l'intérieur du matériau à changement de phase (120) à travers une extrémité d'entrée (131) de la conduite de circulation (130) ; et
un tuyau de sortie (150), connecté à la conduite de circulation (130) qui est disposée à l'intérieur du matériau à changement de phase (120) par une extrémité de sortie (132) de la conduite de circulation (130).

3. Le chauffe-eau électrique à changement de phase selon la revendication 1 ou 2, dans lequel au moins un élément de chauffage (190) a une entrée connectée à une sortie de la pompe (180).

4. Le chauffe-eau électrique à changement de phase selon l'une des revendications 1 à 3, dans lequel la conduite de circulation (130) est en outre équipée d'un second capteur de température (140) pour mesurer la température du matériau à changement de phase (120).

5. Le chauffe-eau électrique à changement de phase selon l'une des revendications 2 à 4, dans lequel le tuyau d'entrée (160) est équipé d'un second capteur de débit (162) pour mesurer un débit d'eau d'entrée dans le tuyau d'entrée (160),
et/ou,
dans lequel le tuyau de sortie (150) est connecté à l'extrémité de sortie (132) de la conduite de circulation (130) par l'intermédiaire d'une vanne thermostatique (153), et une extrémité du tuyau de sortie (150) est connectée à la vanne thermostatique (153) et l'autre extrémité sert de sortie d'eau (151).

6. Le chauffe-eau électrique à changement de phase selon l'une des revendications 1 à 5, dans lequel
la conduite de circulation (130) est en outre pourvue d'un premier tuyau de dérivation, d'une vanne à trois voies et d'un deuxième tuyau de dérivation,
une première extrémité de la vanne à trois voies est connectée à l'extrémité de sortie (132) de la conduite de circulation (130) via le premier tuyau de dérivation ; une deuxième extrémité de la vanne à trois voies est connectée au tuyau d'entrée (160) via le deuxième tuyau de dérivation ; et une troisième extrémité de la vanne à trois voies est connectée au tuyau de sortie (150) ; ou
la vanne à trois voies relie l'extrémité d'entrée (131) et l'extrémité de sortie (132) de la conduite de circulation (130), et une extrémité du tuyau de sortie (150) est reliée à la vanne à trois voies, l'autre extrémité servant de sortie d'eau (151).

7. Le chauffe-eau électrique à changement de phase selon l'une des revendications 2 à 6, dans lequel le tuyau de sortie (150) est en outre équipé d'un troisième capteur de température (152) pour mesurer une température de l'eau de sortie dans le tuyau de sortie (150).

8. Le chauffe-eau électrique à changement de phase selon l'une quelconque des revendications 1 à 7, comprenant en outre une vanne unidirectionnelle (170) disposée sur la conduite de circulation (130) et configurée pour relier une extrémité de sortie (132) et une extrémité d'entrée (131) de la conduite de circulation (130),
et/ou,
comprenant en outre un limiteur de température (191) disposé au niveau de l'élement de chauffage (190) pour limiter une température de chauffage maximale,
et/ou,
comprenant en outre une soupape de décharge unidirectionnelle (163) disposée sur le tuyau d'entrée (160), la soupape de décharge unidirectionnelle (163) étant espacée du second capteur de débit (162) et située en amont de celui-ci.

9. Méthode de contrôle de la température de l'eau, pour contrôler un chauffe-eau électrique à changement de phase tel que défini dans l'une des revendications 1 à 8, dans laquelle la méthode de contrôle de la température de l'eau comprend :
la fermeture d'un tuyau d'entrée (160), la mise en marche d'une pompe (180) et la mise en marche d'un élément de chauffage (190) ;
l'entraînement, par la pompe (180), de l'eau dans une conduite de circulation (130) vers l'élément de chauffage (190) pour la chauffer ;
permettre à l'eau chauffée de s'écouler dans une partie de la conduite de circulation (130) qui est disposée dans un matériau à changement de phase (120) ;
permettre l'échange de chaleur entre le matériau à changement de phase (120) et l'eau chauffée dans la conduite de circulation (130) ; et
arrêter la pompe (180) et l'élément de chauffage (190) pour qu'ils cessent de fonctionner.

10. La méthode de contrôle de la température de l'eau selon la revendication 9, comprenant en outre :
la détection d'une température du matériau à changement de phase (120), et
mettre en marche la pompe (180) et l'élément de chauffage (190) pour le chauffage lorsque la température du matériau à changement de phase (120) est inférieure à une première température seuil,
et/ou,
comprenant en outre :
détecter une température :du matériau à changement de phase (120), et
arrêter la pompe (180) et éteindre l'élément de chauffage (190) pour arrêter le chauffage lorsque la température du matériau à changement de phase (120) est inférieure à une deuxième température seuil.

11. La méthode de contrôle de la température de l'eau selon la revendication 9 ou 10, comprenant en outre :
mettre en marche le tuyau d'entrée (160) et un tuyau de sortie (150) ;
détecter la température de l'eau à la sortie du tuyau de sortie (150) ;
ajuster le degré d'ouverture d'une extrémité chaude d'une vanne à trois voies reliée à une extrémité de sortie (132) de la conduite de circulation (130) et le degré d'ouverture d'une extrémité froide de la vanne à trois voies reliée à une extrémité d'entrée (131) de la conduite de circulation (130), lorsqu'une différence entre la température de l'eau de sortie du tuyau de sortie (150) et une deuxième température de seuil est en dehors d'une plage prédéfinie ; et
commander l'évacuation de l'eau du tuyau de sortie (150) lorsqu'un troisième capteur de température (152) mesure que la différence entre la température de l'eau de sortie du tuyau de sortie (150) et la deuxième température seuil se situe dans la plage prédéfinie,
et/ou,
comprenant en outre :
la mise en marche de la pompe (180) pour diriger le flux d'eau vers l'élément de chauffage (190) ; et
arrêter la pompe (180) pour arrêter l'entraînement lorsqu'un premier capteur de débit (192) mesure qu'un débit d'eau de sortie de l'élément de chauffage (190) est inférieur à un seuil prédéfini.

12. La méthode de contrôle de la température de l'eau selon l'une des revendications 9 à 11, comprenant en outre :
mettre en marche le tuyau d'entrée (160) ; et
fermer une extrémité froide d'une vanne à trois voies qui est connectée à une extrémité d'entrée (131) de la conduite de circulation (130) lorsque l'eau s'écoule du tuyau d'entrée (160) vers la conduite de circulation (130) pour la première fois,
et/ou,
comprenant en outre :
la détection d'une température d'eau de sortie de l'élément de chauffage (190) lorsque le tuyau d'entrée (160) est fermé ; et
arrêter la pompe (180) pour qu'elle cesse de fonctionner et arrêter l'élément de chauffage (190) pour qu'il cesse de fonctionner lorsque la température de l'eau de sortie de l'élément de chauffage (190) atteint un troisième seuil de température.

13. La méthode de contrôle de la température de l'eau selon l'une des revendications 9 à 12, comprenant en outre :
mettre en marche le tuyau d'entrée (160) pour permettre à l'eau de s'écouler du tuyau d'entrée (160) dans l'élément de chauffage (190) à travers une extrémité d'entrée (131) de la conduite de circulation (130) ;
mettre en marche l'élément de chauffage (190) lorsqu'une température de l'eau à la sortie de l'élément de chauffage (190) est inférieure à un quatrième seuil de température ;
chauffer, par l'élément de chauffage (190), l'eau entrant dans l'élément de chauffage (190) et détecter la température de l'eau à la sortie de l'élément de chauffage (190) ; et
éteindre l'élément de chauffage (190) pour qu'il cesse de fonctionner lorsque la température de l'eau à la sortie de l'élément de chauffage (190) atteint la quatrième température seuil,
et/ou,
comprenant en outre :
mettre en marche le tuyau d'entrée (160) et un tuyau de sortie (150) ;
détecter la température de l'eau à la sortie du tuyau de sortie (150) ;
lorsqu'une différence entre la température de l'eau de sortie du tuyau de sortie (150) et la deuxième température seuil est en dehors d'une plage prédéfinie, ajuster une vanne thermostatique (153) pour permettre à la différence entre la température de l'eau de sortie du tuyau de sortie (150) et une deuxième température seuil de rester à l'intérieur de la plage prédéfinie ; et contrôler l'eau à évacuer du tuyau de sortie (150).
